(19) Europäisches Patentamt
European Patent Office
Office européen des brevets

(11) EP 4 174 098 B1

(12) EUROPEAN PATENT SPECIFICATION

(45) Date of publication and mention of the grant of the patent:
**22.01.2025 Bulletin 2025/04**

(21) Application number: **21842115.4**

(22) Date of filing: **08.06.2021**

(51) International Patent Classification (IPC):
***C08F 279/02*** *(2006.01)* ***C08L 25/12*** *(2006.01)*
***C08L 33/24*** *(2006.01)* ***C08L 35/06*** *(2006.01)*
***C08L 55/02*** *(2006.01)* ***C08L 25/08*** *(2006.01)*

(52) Cooperative Patent Classification (CPC):
(C-Sets available)
**C08F 212/08; C08F 8/32; C08F 212/10; C08F 279/04; C08L 25/12;** C08L 2205/02; C08L 2205/03 (Cont.)

(86) International application number:
**PCT/JP2021/021759**

(87) International publication number:
**WO 2022/014206 (20.01.2022 Gazette 2022/03)**

# (54) RESIN COMPOSITION AND MOLDED RESIN ARTICLES

HARZZUSAMMENSETZUNG UND HARZFORMKÖRPER

COMPOSITION DE RÉSINE ET ARTICLES EN RÉSINE MOULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2020 JP 2020119884**

(43) Date of publication of application:
**03.05.2023 Bulletin 2023/18**

(73) Proprietor: **Denka Company Limited**
**Tokyo 103-8338 (JP)**

(72) Inventors:
- **MATSUMOTO, Masanori**
  **Tokyo 103-8338 (JP)**
- **NISHINO, Kohei**
  **Tokyo 103-8338 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 960 814**
**JP-A- 2004 182 835**
**JP-A- 2006 045 252**
**JP-A- 2008 056 904**
**JP-A- 2012 036 384**
**JP-A- 2015 145 479**
**JP-A- 2018 119 047**
**JP-A- 2019 019 238**
**JP-A- H0 959 481**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 174 098 B1

(52) Cooperative Patent Classification (CPC): (Cont.)

C-Sets
**C08F 8/32, C08F 212/08;**
**C08F 212/08, C08F 222/40, C08F 220/44,**
**C08F 222/02;**
**C08F 212/08, C08F 222/40, C08F 222/02;**
**C08F 279/04, C08F 212/08, C08F 220/44;**
**C08L 25/12, C08L 55/02, C08L 25/08;**
**C08L 25/12, C08L 55/02, C08L 35/06**

# Description

## Technical Field

The present invention relates to a resin composition.

## Background Art

In the related art, as thermoplastic resins having excellent heat resistance, copolymers of aromatic vinyl monomers, vinyl cyanide monomers and maleimide monomers have been studied (for example, Patent Literature 1). Patent Literature 2 relates to a heat-resistant masterbatch for use in producing rubber- reinforced styrenic polymers which comprises a specific rubber-reinforced styrenic polymer with a specific maleimide copolymer and a specific styrenic copolymer.

## Citation List

### Patent Literature

[Patent Literature 1] Japanese Unexamined Patent Publication No. H3-205411
[Patent Literature 2] Japanese Unexamined Patent Publication No. H9-59481

## Summary of Invention

### Technical Problem

In molded articles made of a thermoplastic resin, when a coating containing an organic solvent is applied to a molded article, cracks and the like occur in the molded article, a favorable coated surface cannot be formed and the appearance may be poor.
Here, an object of the present invention is to provide a resin composition that allows a molded article having excellent coating resistance to be formed and a molded resin article including the resin composition.

### Solution to Problem

The inventors found that immersion of a solvent into minute cracks on the surface of a molded article, and the solvent causing expansion, breakage or the like of a coating film when a coating film is dried, is one of the causes of poor appearance of the coated surface, and completed the present invention.
One aspect of the present invention relates to a resin composition including a maleimide copolymer (A) including an aromatic vinyl monomer unit, a vinyl cyanide monomer unit, a maleimide monomer unit and an unsaturated dicarboxylic acid monomer unit; a graft copolymer (B) obtained by graft-polymerizing a polymer (b) having a conjugated diene monomer unit with at least one selected from the group consisting of an aromatic vinyl monomer and a vinyl cyanide monomer; and a vinyl copolymer (C) including an aromatic vinyl monomer unit and a vinyl cyanide monomer unit and not including a maleimide monomer unit, wherein, with respect to a total amount of 100 parts by mass of the maleimide copolymer (A), the graft copolymer (B) and the vinyl copolymer (C), a total content of the aromatic vinyl monomer unit is 55.0 to 65.0 parts by mass, a total content of the vinyl cyanide monomer unit is 15.0 to 27.0 parts by mass, a total content of the maleimide monomer unit is 3.0 to 15.0 parts by mass, a total content of the conjugated diene monomer unit is 10.0 to 20.0 parts by mass, and a total content of the unsaturated dicarboxylic acid monomer unit is 0.05 to 10.0 parts by mass, and wherein the melt mass flow rate measured by the method described in JIS K 7210 under conditions of 220°C and a load of 98 N is 3 to 23 g/10 min, wherein a total content of the maleimide copolymer (A), the graft copolymer (B) and the vinyl copolymer (C) based on a total amount of the resin composition is 90 mass% or more.
Such a resin composition is obtained by combining a specific maleimide copolymer (A), a graft copolymer (B) and a vinyl copolymer (C) so that the content of each monomer unit is within the above ranges and the melt flow rate is within the above range, and thus both high fluidity at a high temperature and excellent heat resistance and chemical resistance are achieved. When the resin composition is caused to flow at a high temperature to form a molded resin article, since strain is unlikely to remain in the molded resin article, it is possible to sufficiently reduce the occurrence of cracks caused by the strain. Therefore, with the resin composition, it is possible to sufficiently reduce the poor appearance of the coated surface caused by cracks and realize a molded resin article having excellent coating resistance.

In one aspect, the maleimide copolymer (A) may contain a maleimide copolymer (A-1) having a maleimide monomer unit content of 20.0 mass% or more.
In one aspect, the content of the maleimide copolymer (A-1) based on a total amount of the resin composition may be 5 to 40 mass%.
In one aspect, the graft copolymer (B) may contain a graft copolymer (B-1) having a conjugated diene monomer unit content of 45.0 to 65.0 mass%.
In one aspect, the content of the graft copolymer (B-1) based on a total amount of the resin composition may be 16 to 34 mass%.
In one aspect, the vinyl copolymer (C) may contain a vinyl copolymer (C-1) having a total content of 80.0 mass% or more of the aromatic vinyl monomer unit and the vinyl cyanide monomer unit.
In one aspect, the content of the vinyl copolymer (C-1) based on a total amount of the resin composition may be 40 to 74 mass%.
The gel fraction of the resin composition according to one aspect based on a total amount of the resin composition may be 15 to 25 mass%.
Another aspect of the present invention relates to a molded resin article including the resin composition.

## Advantageous Effects of Invention

According to the present invention, there are provided a resin composition that allows a molded article having excellent coating resistance to be formed and a molded resin article including the resin composition.

## Description of Embodiments

Hereinafter, preferable embodiments of the present invention will be described in detail.
A resin composition of the present embodiment includes a maleimide copolymer (A) including an aromatic vinyl monomer unit, a vinyl cyanide monomer unit, a maleimide monomer unit and an unsaturated dicarboxylic acid monomer unit; a graft copolymer (B) obtained by graft-polymerizing a polymer (b) having a conjugated diene monomer unit with at least one selected from the group consisting of an aromatic vinyl monomer and a vinyl cyanide monomer; and a vinyl copolymer (C) including an aromatic vinyl monomer unit and a vinyl cyanide monomer unit and not including a maleimide monomer unit.
In addition, in the resin composition of the present embodiment, with respect to a total amount of 100 parts by mass of the maleimide copolymer (A), the graft copolymer (B) and the vinyl copolymer (C), the total content of the aromatic vinyl monomer unit (i) is 55.0 to 65.0 parts by mass, the total content of the vinyl cyanide monomer unit (ii) is 15.0 to 27.0 parts by mass, the total content of the maleimide monomer unit (iii) is 3.0 to 15.0 parts by mass, and the total content of the conjugated diene monomer unit (iv) is 10.0 to 20.0 parts by mass.
In addition, the melt mass flow rate of the resin composition of the present embodiment measured by a method according to JIS K 7210 under conditions of 220°C and a load of 98 N is 3 to 23 g/10 min.
The resin composition of the present embodiment is obtained by combining a specific maleimide copolymer (A), a graft copolymer (B) and a vinyl copolymer (C) so that the content of each monomer unit is within the above ranges and the melt flow rate is within the above range. Thereby, the resin composition of the present embodiment has both high fluidity at a high temperature and excellent heat resistance and chemical resistance. When the resin composition of the present embodiment is caused to flow at a high temperature to form a molded resin article, since strain is unlikely to remain in the molded resin article, it is possible to sufficiently reduce the occurrence of cracks caused by the strain. Therefore, according to the resin composition of the present embodiment, it is possible to sufficiently reduce the poor appearance of the coated surface caused by cracks and realize a molded resin article having excellent coating resistance.
Hereinafter, respective monomer units of the resin composition of the present embodiment will be described in detail.

<Aromatic vinyl monomer unit (i)>

The aromatic vinyl monomer unit (i) indicates a structural unit (repeating unit) derived from an aromatic vinyl monomer. The aromatic vinyl monomer may be a monomer having a carbon-carbon double bond and at least one aromatic ring directly bonded to the double bond, and is preferably a monomer in which a group represented by $-C(R)=CH_2$ (R is a hydrogen atom or a methyl group) is bonded to an aromatic ring.
The aromatic ring of the aromatic vinyl monomer unit (i) is preferably a benzene ring or a naphthalene ring, and more preferably a benzene ring.
Examples of aromatic vinyl monomers include styrene monomers selected from the group consisting of styrene and styrene derivatives in which some hydrogen atoms of styrene are substituted with substituents, and vinylnaphthalene

monomers selected from the group consisting of 1-vinylnaphthalene, 2-vinylnaphthalene, and vinylnaphthalene derivatives in which some hydrogen atoms of these are substituted with substituents.

Examples of substituents of respective derivatives include a halogen atom (for example, a fluorine atom, a chlorine atom, a bromine atom or an iodine atom, and preferably a fluorine atom or a chlorine atom), and an alkyl group (for example, an alkyl group having 1 to 16 carbon atoms, preferably an alkyl group having 1 to 8 carbon atoms, and more preferably an alkyl group having 1 to 4 carbon atoms). These groups may further include a substituent (for example, the above substituents) .

The styrene monomer is preferably a compound selected from the group consisting of styrene, α-methylstyrene, p-methylstyrene, ethylstyrene, tert-butylstyrene, chlorostyrene and dichlorostyrene, more preferably a compound selected from the group consisting of styrene and α-methylstyrene, and still more preferably styrene.

The vinylnaphthalene monomer is preferably a compound selected from the group consisting of 1-vinylnaphthalene and 2-vinylnaphthalene, and more preferably 2-vinylnaphthalene.

The aromatic vinyl monomer is preferably a styrene monomer. That is, the aromatic vinyl monomer unit (i) is preferably a styrene monomer unit.

In the resin composition of the present embodiment, the content of the aromatic vinyl monomer unit (i) with respect to a total amount of 100 parts by mass of the maleimide copolymer (A), the graft copolymer (B) and the vinyl copolymer (C) is 55.0 parts by mass or more, preferably 56.0 parts by mass or more, and more preferably 57.0 parts by mass or more. Thereby, the fluidity of the resin composition at a high temperature is further improved, and there is a tendency of a molded resin article having better coating resistance to be easier to obtain.

In addition, the content of the aromatic vinyl monomer unit (i) with respect to a total amount of 100 parts by mass of the maleimide copolymer (A), the graft copolymer (B) and the vinyl copolymer (C) is 65.0 parts by mass or less, and preferably 64.0 parts by mass or less. Thereby, there is a tendency of a molded resin article having better impact resistance to be easier to obtain. That is, the content of the aromatic vinyl monomer unit (i) with respect to a total amount of 100 parts by mass of the maleimide copolymer (A), the graft copolymer (B) and the vinyl copolymer (C) may be, for example, 55.0 to 65.0 parts by mass, 55.0 to 64.0 parts by mass, 56.0 to 65.0 parts by mass, 56.0 to 64.0 parts by mass, 57.0 to 65.0 parts by mass or 57.0 to 64.0 parts by mass.

<Vinyl cyanide monomer unit (ii)>

The vinyl cyanide monomer unit (ii) indicates a structural unit (repeating unit) derived from a vinyl cyanide monomer. The vinyl cyanide monomer may be a monomer having a carbon-carbon double bond and at least one cyano group directly bonded to the double bond.

Examples of vinyl cyanide monomers include acrylonitrile, methacrylonitrile, fumaronitrile, and α-chloroacrylonitrile.

The vinyl cyanide monomer is preferably acrylonitrile. That is, the vinyl cyanide monomer unit (ii) is preferably an acrylonitrile unit.

In the resin composition of the present embodiment, the content of the vinyl cyanide monomer unit (ii) with respect to a total amount of 100 parts by mass of the maleimide copolymer (A), the graft copolymer (B) and the vinyl copolymer (C) is 15.0 parts by mass or more, preferably 16.0 parts by mass or more, more preferably 17.0 parts by mass or more, and still more preferably 18.0 parts by mass or more. Thereby, the fluidity of the resin composition at a high temperature is further improved, and there is a tendency of a molded resin article having better coating resistance to be easier to obtain.

In addition, the content of the vinyl cyanide monomer unit (ii) with respect to a total amount of 100 parts by mass of the maleimide copolymer (A), the graft copolymer (B) and the vinyl copolymer (C) is 27.0 parts by mass or less, preferably 26.0 parts by mass or less, and more preferably 25.0 parts by mass or less. Thereby, there is a tendency of a molded resin article having better heat resistance to be easier to obtain. That is, the content of the vinyl cyanide monomer unit (ii) with respect to a total amount of 100 parts by mass of the maleimide copolymer (A), the graft copolymer (B) and the vinyl copolymer (C) may be, for example, 15.0 to 27.0 parts by mass, 15.0 to 26.0 parts by mass, 15.0 to 25.0 parts by mass, 16.0 to 27.0 parts by mass, 16.0 to 26.0 parts by mass, 16.0 to 25.0 parts by mass, 17.0 to 27.0 parts by mass, 17.0 to 26.0 parts by mass, 17.0 to 25.0 parts by mass, 18.0 to 27.0 parts by mass, 18.0 to 26.0 parts by mass or 18.0 to 25.0 parts by mass.

<Maleimide monomer unit (iii)>

The maleimide monomer unit (iii) indicates a structural unit (repeating unit) derived from a maleimide monomer. The maleimide monomer may be, for example, a monomer having at least one group represented by the following Formula (iii-1). Here, the maleimide monomer unit (iii) does not necessarily have to be formed from a maleimide monomer, and for example, may be formed by modifying an unsaturated dicarboxylic acid monomer unit to be described below with ammonia or a primary amine.

[Chem. 1]

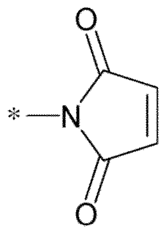

(iii-1)

Examples of maleimide monomers include maleimides, and N-substituted maleimides (that is, maleimides having a substituent on the nitrogen atom). Examples of substituents on the nitrogen atom of N-substituted maleimides include an alkyl group (for example, an alkyl group having 1 to 18 carbon atoms, preferably an alkyl group having 1 to 8 carbon atoms, and more preferably an alkyl group having 1 to 4 carbon atoms), a cycloalkyl group (for example, a cycloalkyl group having 3 to 9 carbon atoms, preferably a cycloalkyl group having 4 to 8 carbon atoms, and more preferably a cycloalkyl group having a 5 to 7 carbon atoms), and an aryl group (for example, an aryl group having 6 to 10 carbon atoms, and preferably a phenyl group). These groups may further include a substituent (for example, the above substituents, a halogen atom (for example, a fluorine atom, a chlorine atom, a bromine atom or an iodine atom, and preferably a fluorine atom or a chlorine atom), an alkoxy group (for example, an alkoxy group having 1 to 18 carbon atoms, preferably an alkoxy group having 1 to 8 carbon atoms, and more preferably an alkoxy group having 1 to 4 carbon atoms)).
Examples of N-substituted maleimides include N-alkyl maleimides such as N-methyl maleimide, N-ethyl maleimide, N-n-butyl maleimide, and N-n-octyl maleimide; N-cycloalkyl maleimides such as N-cyclohexyl maleimide; and N-aryl maleimides such as N-phenyl maleimide and N-(4-methoxyphenyl)maleimide.
The maleimide monomer is preferably an N-substituted maleimide, more preferably an N-aryl maleimide, and still more preferably an N-phenyl maleimide. That is, the maleimide monomer unit (iii) is preferably an N-substituted maleimide unit, more preferably an N-aryl maleimide unit, and still more preferably an N-phenyl maleimide unit.
In the resin composition of the present embodiment, the content of the maleimide monomer unit (iii) with respect to a total amount of 100 parts by mass of the maleimide copolymer (A), the graft copolymer (B) and the vinyl copolymer (C) is 3.0 parts by mass or more, and preferably 3.5 parts by mass or more. Thereby, the heat resistance tends to be further improved.
In addition, the content of the maleimide monomer unit (iii) with respect to a total amount of 100 parts by mass of the maleimide copolymer (A), the graft copolymer (B) and the vinyl copolymer (C) is 15.0 parts by mass or less, preferably 13.0 parts by mass or less, more preferably 11.0 parts by mass or less, and still more preferably 9.0 parts by mass or less. Thereby, the fluidity of the resin composition at a high temperature is further improved, and there is a tendency of a molded resin article having better coating resistance to be easier to obtain. That is, the content of the maleimide monomer unit (iii) with respect to a total amount of 100 parts by mass of the maleimide copolymer (A), the graft copolymer (B) and the vinyl copolymer (C) may be, for example, 3.0 to 15.0 parts by mass, 3.0 to 13.0 parts by mass, 3.0 to 11.0 parts by mass, 3.0 to 9.0 parts by mass, 3.5 to 15.0 parts by mass, 3.5 to 13.0 parts by mass, 3.5 to 11.0 parts by mass or 3.5 to 9.0 parts by mass.

<Conjugated diene monomer unit (iv)>

The conjugated diene monomer unit (iv) indicates a structural unit (repeating unit) derived from a conjugated diene monomer. The conjugated diene monomer may be a monomer having a conjugated diene and is preferably a hydrocarbon having a conjugated diene.
The conjugated diene monomer unit (iv) may have a carbon-carbon double bond and may not have a carbon-carbon double bond. For example, the conjugated diene monomer unit (iv) may be a monomer unit formed by a polymerization reaction of a conjugated diene monomer and having a carbon-carbon double bond or a monomer unit formed by a reaction between a monomer unit and another monomer and having no carbon-carbon double bond.
The number of carbon atoms of the conjugated diene monomer may be, for example, 4 to 5.
Examples of conjugated diene monomers include butadiene and isoprene. The conjugated diene monomer is more preferably butadiene.
In the resin composition of the present embodiment, the content of the conjugated diene monomer unit (iv) with respect to a total amount of 100 parts by mass of the maleimide copolymer (A), the graft copolymer (B) and the vinyl copolymer (C) is 10.0 parts by mass or more, preferably 11.0 parts by mass or more, and may be 12.0 parts by mass or more, 13.0 parts by mass or more or 14.0 parts by mass or more. Thereby, the strength of the resin composition is further improved and there is a tendency of a molded resin article having better impact resistance to be easier to obtain.
In addition, the content of the conjugated diene monomer unit (iv) with respect to a total amount of 100 parts by

mass of the maleimide copolymer (A), the graft copolymer (B) and the vinyl copolymer (C) is 20.0 parts by mass or less, preferably 19.0 parts by mass or less, more preferably 18.0 parts by mass or less, and may be 17.0 parts by mass or less, 16.0 parts by mass or less or 15.0 parts by mass or less. Thereby, the fluidity of the resin composition at a high temperature is further improved, and there is a tendency of a molded resin article having better coating resistance to be easier to obtain. That is, the content of the conjugated diene monomer unit (iv) with respect to a total amount of 100 parts by mass of the maleimide copolymer (A), the graft copolymer (B) and the vinyl copolymer (C) may be 10.0 to 20.0 parts by mass, 10.0 to 19.0 parts by mass, 10.0 to 18.0 parts by mass, 10.0 to 17.0 parts by mass, 10.0 to 16.0 parts by mass, 10.0 to 15.0 parts by mass, 11.0 to 20.0 parts by mass, 11.0 to 19.0 parts by mass, 11.0 to 18.0 parts by mass, 11.0 to 17.0 parts by mass, 11.0 to 16.0 parts by mass, 11.0 to 15.0 parts by mass, 12.0 to 20.0 parts by mass, 12.0 to 19.0 parts by mass, 12.0 to 18.0 parts by mass, 12.0 to 17.0 parts by mass, 12.0 to 16.0 parts by mass, 12.0 to 15.0 parts by mass, 13.0 to 20.0 parts by mass, 13.0 to 19.0 parts by mass, 13.0 to 18.0 parts by mass, 13.0 to 17.0 parts by mass, 13.0 to 16.0 parts by mass, 13.0 to 15.0 parts by mass, 14.0 to 20.0 parts by mass, 14.0 to 19.0 parts by mass, 14.0 to 18.0 parts by mass, 14.0 to 17.0 parts by mass, 14.0 to 16.0 parts by mass or 14.0 to 15.0 parts by mass.

The resin composition of the present embodiment may further include an unsaturated dicarboxylic acid monomer unit (v).

<Unsaturated dicarboxylic acid monomer unit (v)>

The unsaturated dicarboxylic acid monomer unit (v) indicates a structural unit (repeating unit) derived from an unsaturated dicarboxylic acid monomer. Examples of unsaturated dicarboxylic acid monomers include unsaturated dicarboxylic acid and its anhydrides (unsaturated dicarboxylic acid anhydride).

Examples of unsaturated dicarboxylic acids include maleic acid and itaconic acid. Examples of unsaturated dicarboxylic acid anhydrides include maleic anhydride and itaconic anhydride.

In the resin composition of the present embodiment, the content of the unsaturated dicarboxylic acid monomer unit (v) with respect to a total amount of 100 parts by mass of the maleimide copolymer (A), the graft copolymer (B) and the vinyl copolymer (C) is 10.0 parts by mass or less, and may be preferably 5.0 parts by mass or less, more preferably 3.0 parts by mass or less, and yet more preferably 1.0 part by mass or less.

When the resin composition of the present embodiment includes an unsaturated dicarboxylic acid monomer unit (v), the content of the unsaturated dicarboxylic acid monomer unit (v) with respect to a total amount of 100 parts by mass of the maleimide copolymer (A), the graft copolymer (B) and the vinyl copolymer (C) is 0.05 parts by mass or more, or may be 0.1 parts by mass or more. Thereby, a molded resin article having excellent adhesion to a coating film is easily obtained. That is, the content of the unsaturated dicarboxylic acid monomer unit (v) with respect to a total amount of 100 parts by mass of the maleimide copolymer (A), the graft copolymer (B) and the vinyl copolymer (C) may be, for example, is 0.05 to 10.0 parts by mass, or may be 0.05 to 5.0 parts by mass, 0.05 to 3.0 parts by mass, 0.05 to 1.0 part by mass, 0.1 to 15.0 parts by mass, 0.1 to 10.0 parts by mass, 0.1 to 5.0 parts by mass, 0.1 to 3.0 parts by mass or 0.1 to 1.0 part by mass.

The resin composition of the present embodiment may further contain a monomer unit (x) other than the above (i) to (v).

Examples of other monomer units (x) include a methyl (meth)acrylate unit, an ethyl (meth)acrylate unit, a butyl (meth)acrylate unit, a (meth)acrylic acid unit, and a (meth)acrylic acid amide unit.

In the resin composition of the present embodiment, the content of other monomer units (x) with respect to a total amount of 100 parts by mass of the maleimide copolymer (A), the graft copolymer (B) and the vinyl copolymer (C) may be, for example, 15.0 parts by mass or less, and is preferably 10.0 parts by mass or less, more preferably 5.0 parts by mass or less, and may be 3.0 parts by mass or less, 2.0 parts by mass or less or 1.0 part by mass or less, and may be 0 parts by mass.

That is, in the resin composition of the present embodiment, the total content of the monomer units (i) to (v) with respect to a total amount of 100 parts by mass of the maleimide copolymer (A), the graft copolymer (B) and the vinyl copolymer (C) may be, for example, 85.0 parts by mass or more, and is preferably 90.0 parts by mass or more, more preferably 95.0 parts by mass or more, and may be 97.0 parts by mass or more, 98.0 parts by mass or more or 99.0 parts by mass or more, and may be 100 parts by mass. Thereby, the above effect is more significantly exhibited.

The content of each monomer unit can be measured by the $^{13}$C-NMR method using the following device and measurement conditions.

device name: JNM-ECX series FT-NMR (commercially available from JEOL Ltd.)
solvent: deuterated chloroform
concentration: 2.5 mass%
temperature :27°C
cumulative number: 8,000

Next, respective copolymers contained in the resin composition of the present embodiment will be described in detail.

<Maleimide copolymer (A)>

The maleimide copolymer (A) is a copolymer having an aromatic vinyl monomer unit (i), a vinyl cyanide monomer unit (ii) and a maleimide monomer unit (iii).

The glass transition temperature ($Tg_1$) of the maleimide copolymer (A) is, for example, 153°C or higher, preferably 157°C or higher, and more preferably 163°C or higher. Thereby, a molded resin article having better heat resistance is easily obtained. In addition, the glass transition temperature ($Tg_1$) of the maleimide copolymer (A) is, for example, 193°C or lower, and preferably 188°C or lower, and more preferably 183°C or lower. Thereby, the dispersibility in the resin composition is improved, and a uniform resin composition is more easily produced. That is, the glass transition temperature ($Tg_1$) of the maleimide copolymer (A) may be, for example, 153 to 193°C, 153 to 188°C, 153 to 183°C, 157 to 193°C, 157 to 188°C, 157 to 183°C, 163 to 193°C, 163 to 188°C, or 163 to 183°C.

Here, in this specification, the glass transition temperature ($Tg_1$) refers to an extrapolated glass transition start temperature (Tig) of the maleimide copolymer measured using the following device and measurement conditions according to JIS K-7121.

device name: differential scanning calorimeter Robot DSC6200 (commercially available from Seiko Instruments Inc.)
heating rate: 10°C/MIN

The weight average molecular weight of the maleimide copolymer (A) is, for example, 50,000 or more, preferably 70,000 or more, and more preferably 80,000 or more. Thereby, a molded resin article having better impact resistance is easily obtained. In addition, the weight average molecular weight of the maleimide copolymer (A) is, for example, 170,000 or less, preferably 160,000 or less, and more preferably 150,000 or less. Thereby, the fluidity of the resin composition at a high temperature is further improved, and there is a tendency of a molded resin article having better coating resistance to be easier to obtain. That is, the weight average molecular weight of the maleimide copolymer (A) may be, for example, 50,000 to 17,0000, 50,000 to 160,000, 50,000 to 150,000, 70,000 to 170,000, 70,000 to 160,000, 70,000 to 150,000, 80,000 to 170,000, 80,000 to 160,000 or 80,000 to 150,000.

Here, in this specification, the weight average molecular weight is a value in terms of polystyrene measured through gel permeation chromatography (GPC), and can be measured under the following conditions.

measurement device name: SYSTEM-21 Shodex (commercially available from Showa Denko K.K.)
column: three PL gel MIXED-B in series (commercially available from Polymer Laboratories Ltd.)
temperature: 40°C
detection: differential refractive index
solvent: tetrahydrofuran
concentration: 2 mass%
calibration curve: created using standard polystyrene (PS) (commercially available from Polymer Laboratories Ltd.)

The content of each monomer unit in the maleimide copolymer (A) may be appropriately changed so that a preferable content range of the resin composition is satisfied, preferable properties of the maleimide copolymer (A) are satisfied, and preferable properties of the resin composition are satisfied.

The content of the aromatic vinyl monomer unit (i) in the maleimide copolymer (A) may be, for example, 40.0 mass% or more, and is preferably 43.0 mass% or more, and more preferably 45.0 mass% or more. In addition, the content of the aromatic vinyl monomer unit (i) in the maleimide copolymer (A) may be, for example, 58.0 mass% or less, and is preferably 55.0 mass% or less, and more preferably 52.0 mass% or less. That is, the content of the aromatic vinyl monomer unit (i) in the maleimide copolymer (A) may be, for example, 40.0 to 58.0 mass%, 40.0 to 55.0 mass%, 40.0 to 52.0 mass%, 43.0 to 58.0 mass%, 43.0 to 55.0 mass%, 43.0 to 52.0 mass%, 45.0 to 58.0 mass%, 45.0 to 55.0 mass% or 45.0 to 52.0 mass%.

The content of the vinyl cyanide monomer unit (ii) in the maleimide copolymer (A) may be, for example, 5.0 mass% or more, and is preferably 6.0 mass% or more, and more preferably 7.0 mass% or more. In addition, the content of the vinyl cyanide monomer unit (ii) in the maleimide copolymer (A) may be, for example, 20.0 mass% or less, and is preferably 18.0 mass% or less, and more preferably 15.0 mass% or less. That is, the content of the vinyl cyanide monomer unit (ii) in the maleimide copolymer (A) may be, for example, 5.0 to 20.0 mass%, 5.0 to 18.0 mass%, 5.0 to 15.0 mass%, 6.0 to 20.0 mass%, 6.0 to 18.0 mass%, 6.0 to 15.0 mass%, 7.0 to 20.0 mass%, 7.0 to 18.0 mass% or 7.0 to 15.0 mass%.

The content of the maleimide monomer unit (iii) in the maleimide copolymer (A) may be, for example, 35.0 mass% or more, and is preferably 37.0 mass% or more, and more preferably 39.0 mass% or more. In addition, the content of the

maleimide monomer unit (iii) in the maleimide copolymer (A) may be, for example, 50.0 mass% or less, and is preferably 47.0 mass% or less, and more preferably 44.0 mass% or less. That is, the content of the maleimide monomer unit (iii) in the maleimide copolymer (A) may be, for example, 35.0 to 50.0 mass%, 35.0 to 47.0 mass%, 35.0 to 44.0 mass%, 37.0 to 50.0 mass%, 37.0 to 47.0 mass%, 37.0 to 44.0 mass%, 39.0 to 50.0 mass%, 39.0 to 47.0 mass% or 39.0 to 44.0 mass%.

The maleimide copolymer (A) may further include an unsaturated dicarboxylic acid monomer unit (v).

The content of the unsaturated dicarboxylic acid monomer unit (v) in the maleimide copolymer (A) may be, for example, 10.0 mass% or less, and is preferably 5.0 mass% or less, and more preferably 2.0 mass% or less. In addition, when the maleimide copolymer (A) includes an unsaturated dicarboxylic acid monomer unit (v), the content of the unsaturated dicarboxylic acid monomer unit (v) may be, for example, 0.5 mass% or more or 1.0 mass% or more. That is, the content of the unsaturated dicarboxylic acid monomer unit (v) in the maleimide copolymer (A) may be, for example, 0 to 10.0 mass%, 0 to 5.0 mass%, 0 to 2.0 mass%, 0.5 to 10.0 mass%, 0.5 to 5.0 mass%, 0.5 to 2.0 mass%, 1.0 to 10.0 mass%, 1.0 to 5.0 mass% or 1.0 to 2.0 mass%.

In the maleimide copolymer, the ratio (v/i) of the unsaturated dicarboxylic acid monomer unit (v) to the maleimide monomer unit (i) in terms of the molar ratio may be, for example, 0.25 or less and is preferably 0.14 or less, and more preferably 0.06 or less. In addition, the ratio (v/i) may be, for example, 0.01 or more or 0.02 or more. That is, the ratio (v/i) of the unsaturated dicarboxylic acid monomer unit (v) to the maleimide monomer unit (i) in terms of the molar ratio may be, for example, 0 to 0.25, 0 to 0.14, 0 to 0.06, 0.01 to 0.25, 0.01 to 0.14, 0.01 to 0.06, 0.02 to 0.25, 0.02 to 0.14 or 0.02 to 0.06.

The maleimide copolymer (A) may further include other monomer units (x). Examples of other monomer units (x) that the maleimide copolymer (A) includes include methyl (meth)acrylate, ethyl (meth)acrylate, butyl (meth)acrylate, (meth)acrylic acid, and (meth)acrylic acid amide.

The content of other monomer units (x) in the maleimide copolymer (A) may be, for example, 15.0 mass% or less, and is preferably 10.0 mass% or less, and more preferably 5.0 mass% or less. In addition, when the maleimide copolymer (A) includes other monomer units (x), the content of other monomer units (x) may be, for example, 0.5 mass% or more or 1.0 mass% or more. That is, the content of other monomer units (x) in the maleimide copolymer (A) may be, for example, 0 to 15.0 mass%, 0 to 10.0 mass%, 0 to 5.0 mass%, 0.5 to 15.0 mass%, 0.5 to 10.0 mass%, 0.5 to 5.0 mass%, 1.0 to 15.0 mass%, 1.0 to 10.0 mass% or 1.0 to 5.0 mass%.

The maleimide copolymer (A) preferably contains a maleimide copolymer (A-1) having a content of 20.0 mass% or more of the maleimide monomer unit (iii). The content of the maleimide monomer unit (iii) in the maleimide copolymer (A-1) is preferably 25.0 mass% or more, and more preferably 30.0 mass% or more.

The content of the maleimide copolymer (A) based on a total amount of the resin composition may be, for example, 5 mass% or more, and is preferably 7 mass% or more, and more preferably 9 mass% or more. Thereby, a molded resin article having better heat resistance is easily obtained. In addition, the content of the maleimide copolymer (A) based on a total amount of the resin composition may be, for example, 40 mass% or less, and is preferably 28 mass% or less, and more preferably 23 mass% or less. Thereby, the fluidity of the resin composition at a high temperature is further improved, and there is a tendency of a molded resin article having better coating resistance to be easier to obtain. That is, the content of the maleimide copolymer (A) based on a total amount of the resin composition may be, for example, 5 to 40 mass%, 5 to 28 mass%, 5 to 23 mass%, 7 to 40 mass%, 7 to 28 mass%, 7 to 23 mass%, 9 to 40 mass%, 9 to 28 mass% or 9 to 23 mass%.

The content of the maleimide copolymer (A-1) based on a total amount of the resin composition may be, for example, 5 mass% or more, and is preferably 7 mass% or more, and more preferably 9 mass% or more. Thereby, a molded resin article having better heat resistance is easily obtained. In addition, the content of the maleimide copolymer (A-1) based on a total amount of the resin composition may be, for example, 40 mass% or less, and is preferably 28 mass% or less, and more preferably 23 mass% or less. Thereby, the fluidity of the resin composition at a high temperature is further improved, and there is a tendency of a molded resin article having better coating resistance to be easier to obtain. That is, the content of the maleimide copolymer (A-1) based on a total amount of the resin composition may be, for example, 5 to 40 mass%, 5 to 28 mass%, 5 to 23 mass%, 7 to 40 mass%, 7 to 28 mass%, 7 to 23 mass%, 9 to 40 mass%, 9 to 28 mass% or 9 to 23 mass%.

A method of producing the maleimide copolymer (A) is not particularly limited. The maleimide copolymer (A) can be produced by, for example, subjecting a monomer component containing an aromatic vinyl monomer, a vinyl cyanide monomer and a maleimide monomer to a polymerization reaction. In addition, the maleimide copolymer (A) can be produced by subjecting, for example, a monomer component containing an aromatic vinyl monomer, a vinyl cyanide monomer and an unsaturated dicarboxylic acid monomer to a polymerization reaction, forming a polymer (A') having an aromatic vinyl monomer unit (i), a vinyl cyanide monomer unit (ii) and an unsaturated dicarboxylic acid monomer unit (v), and modifying at least a part of the unsaturated dicarboxylic acid monomer unit (v) in the polymer (A') to the maleimide monomer unit (iii).

The polymerization reaction method is not particularly limited, and for example, known polymerization methods such as bulk polymerization, solution polymerization, and suspension polymerization may be applied.

The polymerization reaction may be performed by reacting a monomer component and a polymerization initiator. The polymerization initiator is not particularly limited as long as it is an initiator that can initiate the polymerization reaction

of the monomer component, and known polymerization initiators can be used. Examples of polymerization initiators include organic peroxide and azo compounds.

Examples of organic peroxides include peroxyketals such as 1,1 -bis(t-butylperoxy)-3,3,5-trimethylcyclohexane, 2,2-bis(4,4-di-t-butylperoxycyclohexyl)propane, and 1,1-bis(t-butylperoxy)cyclohexane, peroxyesters such as t-butylperoxy-2-ethylhexanoate, t-butylperoxyisopropyl monocarbonate, and t-butyl peroxacetate, and hydroperoxides such as diisopropylbenzene hydroperoxide, cumene hydroperoxide, and t-butyl hydroperoxide.

Examples of azo compounds include 2,2-azobisisobutyronitrile, 2,2-azobis(2,4-dimethylvaleronitrile), and 2,2-azobis(2-methylbutyronitrile).

In the polymerization reaction, a chain transfer agent or a molecular weight adjusting agent may be used. As the chain transfer agent or the molecular weight adjusting agent, known agents can be used without particular limitation, and for example, mercaptans such as t-dodecyl mercaptan and n-dodecyl mercaptan, terpineol, $\alpha$-methylstyrene dimer and the like can be used.

The unsaturated dicarboxylic acid monomer unit (v) can be modified by, for example, a reaction of the polymer (A'), ammonia and/or a primary amine (hereinafter also referred to as a modification reaction).

The reaction temperature of the modification reaction may be, for example, 120°C to 250°C and is preferably 150°C to 230°C.

The modification reaction may be performed in the presence of a catalyst. For example, the catalyst is preferably a tertiary amine such as trimethylamine or triethylamine, and particularly preferably trimethylamine. For example, the amount of the catalyst with respect to a total amount of 100 parts by mass of ammonia and primary amines may be 0.01 to 2 parts by mass.

<Graft copolymer (B)>

The graft copolymer (B) is a copolymer obtained by graft-polymerizing the polymer (b) having a conjugated diene monomer unit (iv) with at least one selected from the group consisting of an aromatic vinyl monomer and a vinyl cyanide monomer. That is, the graft copolymer includes at least one selected from the group consisting of a conjugated diene monomer unit (iv), an aromatic vinyl monomer unit (i) and a vinyl cyanide monomer unit (ii).

The glass transition temperature ($Tg_2$) on the low temperature side derived from the polymer (b) of the graft copolymer (B) is, for example, -40°C or lower, preferably -50°C or lower, and more preferably -70°C or lower. Thereby, a molded resin article having better impact resistance under a low temperature environment is easily obtained.

The content of each monomer unit in the graft copolymer (B) may be appropriately changed so that a preferable content range of the resin composition is satisfied, preferable properties of the graft copolymer (B) are satisfied, and preferable properties of the resin composition are satisfied.

The content of the conjugated diene monomer unit (iv) in the graft copolymer (B) may be, for example, 45.0 mass% or more, and is preferably 47.0 mass% or more, and more preferably 50.0 mass% or more. In addition, the content of the conjugated diene monomer unit (iv) in the graft copolymer (B) may be, for example, 65.0 mass% or less, and is preferably 63.0 mass% or less, and more preferably 60.0 mass% or less. That is, the content of the conjugated diene monomer unit (iv) in the graft copolymer (B) may be, for example, 45.0 to 65.0 mass%, 45.0 to 63.0 mass%, 45.0 to 60.0 mass%, 47.0 to 65.0 mass%, 47.0 to 63.0 mass%, 47.0 to 60.0 mass%, 50.0 to 65.0 mass%, 50.0 to 63.0 mass% or 50.0 to 60.0 mass%.

The total content of the aromatic vinyl monomer unit (i) and the vinyl cyanide monomer unit (ii) in the graft copolymer (B) may be, for example, 35.0 mass% or more, and is preferably 37.0 mass% or more, and more preferably 40.0 mass% or more. In addition, the total content of the aromatic vinyl monomer unit (i) and the vinyl cyanide monomer unit (ii) in the graft copolymer (B) may be, for example, 55.0 mass% or less, and is preferably 53.0 mass% or less, and more preferably 50.0 mass% or less. That is, the total content of the aromatic vinyl monomer unit (i) and the vinyl cyanide monomer unit (ii) in the graft copolymer (B) may be, for example, 35.0 to 55.0 mass%, 35.0 to 53.0 mass%, 35.0 to 50.0 mass%, 37.0 to 55.0 mass%, 37.0 to 53.0 mass%, 37.0 to 50.0 mass%, 40.0 to 55.0 mass%, 40.0 to 53.0 mass% or 40.0 to 50.0 mass%.

The content of the aromatic vinyl monomer unit (i) in the graft copolymer (B) may be, for example, 24.0 mass% or more, and is preferably 25.0 mass% or more, and more preferably 27.0 mass% or more. In addition, in this embodiment, the content of the aromatic vinyl monomer unit (i) in the graft copolymer (B) may be, for example, 41.0 mass% or less, and is preferably 39.0 mass% or less, and more preferably 37.0 mass% or less. That is, the content of the aromatic vinyl monomer unit (i) in the graft copolymer (B) may be, for example, 24.0 to 41.0 mass%, 24.0 to 39.0 mass%, 24.0 to 37.0 mass%, 25.0 to 41.0 mass%, 25.0 to 39.0 mass%, 25.0 to 37.0 mass%, 27.0 to 41.0 mass%, 27.0 to 39.0 mass% or 27.0 to 37.0 mass%.

The content of the vinyl cyanide monomer unit (ii) in the graft copolymer (B) may be, for example, 9.0 mass% or more, and is preferably 10.0 mass% or more, and more preferably 11.0 mass% or more. In addition, in this embodiment, the content of the vinyl cyanide monomer unit (ii) in the graft copolymer (B) may be, for example, 18.0 mass% or less, and is preferably 17.0 mass% or less, and more preferably 16.0 mass% or less. That is, the content of the vinyl cyanide monomer

unit (ii) in the graft copolymer (B) may be, for example, 9.0 to 18.0 mass%, 9.0 to 17.0 mass%, 9.0 to 16.0 mass%, 10.0 to 18.0 mass%, 10.0 to 17.0 mass%, 10.0 to 16.0 mass%, 11.0 to 18.0 mass%, 11.0 to 17.0 mass% or 11.0 to 16.0 mass%.

In the graft copolymer (B), the ratio (ii/i) of the content of the vinyl cyanide monomer unit (ii) to the content of the aromatic vinyl monomer unit (i) in terms of the mass ratio may be, for example, 0.67 or less, and is preferably 0.54 or less, and more preferably 0.49 or less. In addition, the ratio (ii/i) may be, for example, 0.25 or more or 0.3 or more. That is, the ratio (ii/i) may be, for example, 0.25 to 0.67, 0.25 to 0.54, 0.25 to 0.49, 0.3 to 0.67, 0.3 to 0.54 or 0.3 to 0.49.

The graft copolymer (B) may further include a monomer unit (y) other than the conjugated diene monomer unit (iv), the aromatic vinyl monomer unit (i) and the vinyl cyanide monomer unit (ii).

Examples of monomer units (y) include a maleimide monomer unit (iii), an unsaturated dicarboxylic acid monomer unit (v), and the monomer unit (x), and among these, methyl (meth)acrylate, ethyl (meth)acrylate, butyl (meth)acrylate, (meth)acrylic acid, (meth)acrylic acid amide or the like is preferable.

The content of the monomer unit (y) in the graft copolymer (B) may be, for example, 7.0 mass% or less, and is preferably 5.0 mass% or less, and more preferably 3.0 mass% or less. In addition, when the graft copolymer (B) includes the monomer unit (y), the content of the monomer unit (y) may be, for example, 0.2 mass% or more or 0.5 mass% or more. That is, the content of the monomer unit (y) in the graft copolymer (B) may be, for example, 0 to 7.0 mass%, 0 to 5.0 mass%, 0 to 3.0 mass%, 0.2 to 7.0 mass%, 0.2 to 5.0 mass%, 0.2 to 3.0 mass%, 0.5 to 7.0 mass%, 0.5 to 5.0 mass% or 0.5 to 3.0 mass%.

The graft copolymer (B) preferably contains a graft copolymer (B-1) having a content of 45.0 to 65.0 mass% of the conjugated diene monomer unit (iv).

The content of the graft copolymer (B) based on a total amount of the resin composition may be, for example, 16 mass% or more, and is preferably 18 mass% or more, and more preferably 20 mass% or more. Thereby, a molded resin article having better impact resistance is easily obtained. In addition, the content of the graft copolymer (B) based on a total amount of the resin composition may be, for example, 34 mass% or less, and is preferably 32 mass% or less, and more preferably 30 mass% or less. Thereby, the fluidity of the resin composition at a high temperature is further improved, and there is a tendency of a molded resin article having better coating resistance to be easier to obtain. That is, the content of the graft copolymer (B) based on a total amount of the resin composition may be, for example, 16 to 34 mass%, 16 to 32 mass%, 16 to 30 mass%, 18 to 34 mass%, 18 to 32 mass%, 18 to 30 mass%, 20 to 34 mass%, 20 to 32 mass% or 20 to 30 mass%.

The content of the graft copolymer (B-1) based on a total amount of the resin composition may be, for example, 16 mass% or more, and is preferably 18 mass% or more, and more preferably 20 mass% or more. Thereby, a molded resin article having better impact resistance is easily obtained. In addition, the content of the graft copolymer (B-1) based on a total amount of the resin composition may be, for example, 34 mass% or less, and is preferably 32 mass% or less, and more preferably 30 mass% or less. Thereby, the fluidity of the resin composition at a high temperature is further improved, and there is a tendency of a molded resin article having better coating resistance to be easier to obtain. That is, the content of the graft copolymer (B-1) based on a total amount of the resin composition may be, for example, 16 to 34 mass%, 16 to 32 mass%, 16 to 30 mass%, 18 to 34 mass%, 18 to 32 mass%, 18 to 30 mass%, 20 to 34 mass%, 20 to 32 mass% or 20 to 30 mass%.

(Polymer (b))

The polymer (b) is a polymer including a conjugated diene monomer unit (iv). The polymer (b) may be a homopolymer of a conjugated diene monomer or a copolymer of a conjugated diene monomer and another monomer.

The content of the conjugated diene monomer unit (iv) in the polymer (b) may be, for example, 60.0 mass% or more, and is preferably 80.0 mass% or more, more preferably 90.0 mass% or more, and may be 100 mass%.

The polymer (b) may further include a monomer unit (y') other than the conjugated diene monomer unit (iv).

Examples of monomer units (y') of the polymer (b) include an aromatic vinyl monomer unit (i), a vinyl cyanide monomer unit (ii), and the monomer unit (y), and among these, styrene or the like is preferable.

The content of the monomer unit (y') in the polymer (b) may be, for example, 40.0 mass% or less, and is preferably 20.0 mass% or less, and more preferably 10.0 mass% or less. In addition, when the polymer (b) includes the monomer unit (y'), the content of the monomer unit (y') may be, for example, 1.0 mass% or more or 2.0 mass% or more. That is, the content of the monomer unit (y') in the polymer (b) may be, for example, 0 to 40.0 mass%, 0 to 20.0 mass%, 0 to 10.0 mass%, 1.0 to 40.0 mass%, 1.0 to 20.0 mass%, 1.0 to 10.0 mass%, 2.0 to 40.0 mass%, 2.0 to 20.0 mass% or 2.0 to 10.0 mass%.

A method of producing the polymer (b) is not particularly limited, and for example, it can be produced by subjecting a monomer component containing a conjugated diene monomer to a polymerization reaction.

The polymerization method for performing the polymerization reaction for producing the polymer (b) is not particularly limited, and for example, known polymerization methods such as emulsion polymerization and solution polymerization may be applied.

The polymerization reaction may be performed by reacting a monomer component and a polymerization initiator. The polymerization initiator is not particularly limited as long as it is an initiator that can initiate the polymerization reaction of the monomer component, and known polymerization initiators can be used.

Examples of polymerization initiators include a peroxide (for example, potassium persulfate, cumene hydroperoxide, etc.), a redox catalyst in which a peroxide and a reducing agent that promotes its decomposition are combined, an azo compound, an organolithium initiator, and a catalyst in which a transition metal compound and an organic aluminum are combined.

In the polymerization reaction, a chain transfer agent or a molecular weight adjusting agent may be used. As the chain transfer agent or the molecular weight adjusting agent, known agents (for example, those described above) can be used without particular limitation.

(Graft polymerization)

The graft copolymer (B) can be produced by graft-polymerizing the polymer (b) with at least one selected from the group consisting of an aromatic vinyl monomer and a vinyl cyanide monomer.

The graft polymerization can be performed by subjecting the polymer (b) and a monomer component containing at least one selected from the group consisting of an aromatic vinyl monomer and a vinyl cyanide monomer to a polymerization reaction.

The polymerization method in the graft polymerization is not particularly limited, and for example, known polymerization methods such as emulsion polymerization, bulk polymerization, and solution polymerization may be applied.

The graft polymerization may be performed by reacting the polymer (b), a monomer component and a polymerization initiator. The polymerization initiator is not particularly limited as long as it is an initiator that can initiate the reaction between the polymer (b) and the monomer component, and known polymerization initiators can be used.

Examples of polymerization initiators include the above organic peroxide, the above azo compound, and a redox catalyst in which an organic peroxide and a reducing agent that promotes its decomposition are combined.

In the polymerization reaction, a chain transfer agent or a molecular weight adjusting agent may be used. As the chain transfer agent or the molecular weight adjusting agent, known agents (for example, those described above) can be used without particular limitation.

In the graft polymerization, all carbon-carbon double bonds of the conjugated diene monomer unit (iv) in the polymer (b) may react with the monomer component, and only some bonds may react with the monomer component (that is, carbon-carbon double bonds remain in the graft copolymer (B)).

In the graft copolymer (B), the conjugated diene monomer unit (iv) may include a monomer unit (iv-1) having no carbon-carbon double bond (that is, a monomer unit reacted with the monomer component in the graft polymerization) and a monomer unit (iv-2) having a carbon-carbon double bond (that is, a monomer unit that did not react with the monomer component in the graft polymerization).

<Vinyl copolymer (C)>

The vinyl copolymer (C) is a copolymer having an aromatic vinyl monomer unit (i) and a vinyl cyanide monomer unit (ii), and not having a maleimide monomer unit (iii).

The glass transition temperature ($Tg_3$) of the vinyl copolymer (C) is, for example, 97°C or higher, preferably 100°C or higher, and more preferably 103°C or higher. Thereby, a molded resin article having better heat resistance is easily obtained. In addition, the glass transition temperature ($Tg_3$) of the vinyl copolymer (C) is, for example, 115°C or lower, preferably 112°C or lower, and more preferably 110°C or lower. Thereby, the fluidity of the resin composition at a high temperature is further improved, and a molded resin article having better coating resistance is easily obtained. That is, the glass transition temperature ($Tg_3$) of the vinyl copolymer (C) may be, for example, 97 to 115°C, 97 to 112°C, 97 to 110°C, 100 to 115°C, 100 to 112°C, 100 to 110°C, 103 to 115°C, 103 to 112°C or 103 to 110°C.

The weight average molecular weight of the vinyl copolymer (C) is, for example, 50,000 or more, preferably 70,000 or more, and more preferably 80,000 or more. Thereby, a molded resin article having better impact resistance is easily obtained. In addition the weight average molecular weight of the vinyl copolymer (C) is, for example, 200,000 or less, preferably 180,000 or less, and more preferably 160,000 or less. Thereby, the fluidity of the resin composition at a high temperature is further improved, and a molded resin article having better coating resistance is easily obtained. That is, the weight average molecular weight of the vinyl copolymer (C) may be, for example, 50,000 to 200,000, 50,000 to 180,000, 50,000 to 160,000, 70,000 to 200,000, 70,000 to 180,000, 70,000 to 160,000, 80,000 to 200,000, 80,000 to 180,000 or 80,000 to 160,000.

The content of each monomer unit in the vinyl copolymer (C) may be appropriately changed so that a preferable content range of the resin composition is satisfied, preferable properties of the vinyl copolymer (C) are satisfied, and

preferable properties of the resin composition are satisfied.

The content of the aromatic vinyl monomer unit (i) in the vinyl copolymer (C) may be, for example, 60.0 mass% or more, and is preferably 65.0 mass% or more, and more preferably 67.0 mass% or more. In addition, the content of the aromatic vinyl monomer unit (i) in the vinyl copolymer (C) may be, for example, 80.0 mass% or less, and is preferably 77.0 mass% or less, and more preferably 75.0 mass% or less. That is, the content of the aromatic vinyl monomer unit (i) in the vinyl copolymer (C) may be, for example, 60.0 to 80.0 mass%, 60.0 to 77.0 mass%, 60.0 to 75.0 mass%, 65.0 to 80.0 mass%, 65.0 to 77.0 mass%, 65.0 to 75.0 mass%, 67.0 to 80.0 mass%, 67.0 to 77.0 mass% or 67.0 to 75.0 mass%.

The content of the vinyl cyanide monomer unit (ii) in the vinyl copolymer (C) may be, for example, 20.0 mass% or more, and is preferably 23.0 mass% or more, and more preferably 25.0 mass% or more. In addition, the content of the vinyl cyanide monomer unit (ii) in the vinyl copolymer (C) may be, for example, 40.0 mass% or less, and is preferably 35.0 mass% or less, and more preferably 33.0 mass% or less. That is, the content of the vinyl cyanide monomer unit (ii) in the vinyl copolymer (C) may be, for example, 20.0 to 40.0 mass%, 20.0 to 35.0 mass%, 20.0 to 33.0 mass%, 23.0 to 40.0 mass%, 23.0 to 35.0 mass%, 23.0 to 33.0 mass%, 25.0 to 40.0 mass%, 25.0 to 35.0 mass% or 25.0 to 33.0 mass%.

The vinyl copolymer (C) may further include a monomer unit (z) other than the aromatic vinyl monomer unit (i) and the vinyl cyanide monomer unit (ii).

Examples of monomer units (z) include a conjugated diene monomer unit (iv), an unsaturated dicarboxylic acid monomer (v), and the monomer unit (x), and among these, the monomer unit (x) is preferable, and a monomer unit selected from the group consisting of a methyl (meth)acrylate unit, an ethyl (meth)acrylate unit, a butyl (meth)acrylate unit, a (meth) acrylic acid unit and a (meth)acrylic acid amide unit is more preferable.

The content of the monomer unit (z) in the vinyl copolymer (C) may be, for example, 15.0 mass% or less, and is preferably 10.0 mass% or less, and more preferably 5.0 mass% or less. In addition, when the vinyl copolymer (C) includes the monomer unit (z), the content of the monomer unit (z) may be, for example, 0.5 mass% or more or 1.0 mass% or more. That is, the content of the monomer unit (z) in the vinyl copolymer (C) may be, for example, 0 to 15.0 mass%, 0 to 10.0 mass%, 0 to 5.0 mass%, 0.5 to 15.0 mass%, 0.5 to 10.0 mass%, 0.5 to 5.0 mass%, 1.0 to 15.0 mass%, 1.0 to 10.0 mass% or 1.0 to 5.0 mass%.

The vinyl copolymer (C) preferably contains a vinyl copolymer (C-1) having a total content of 80 mass% or more of the aromatic vinyl monomer unit (i) and the vinyl cyanide monomer unit (ii). The total content of the aromatic vinyl monomer unit (i)and the vinyl cyanide monomer unit (ii) in the vinyl copolymer (C-1) is preferably 90.0 mass% or more, more preferably 95.0 mass% or more, and may be 100 mass%.

The content of the vinyl copolymer (C) based on a total amount of the resin composition may be, for example, 40 mass% or more, and is preferably 45 mass% or more, and more preferably 55 mass% or more. Thereby, a molded resin article having better coating resistance is easily obtained. In addition, the content of the vinyl copolymer (C) based on a total amount of the resin composition may be, for example, 74 mass% or less, and is preferably 72 mass% or less, and more preferably 70 mass% or less. Thereby, the fluidity of the resin composition at a high temperature is further improved, and a molded resin article having better coating resistance is easily obtained. That is, the content of the vinyl copolymer (C) based on a total amount of the resin composition may be, for example, 40 to 74 mass%, 40 to 72 mass%, 40 to 70 mass%, 45 to 74 mass%, 45 to 72 mass%, 45 to 70 mass%, 55 to 74 mass%, 55 to 72 mass% or 55 to 70 mass%.

The content of the vinyl copolymer (C-1) based on a total amount of the resin composition may be, for example, 40 mass% or more, and is preferably 45 mass% or more, and more preferably 55 mass% or more. Thereby, a molded resin article having better coating resistance is easily obtained. In addition, the content of the vinyl copolymer (C-1) based on a total amount of the resin composition may be, for example, 74 mass% or less, and is preferably 72 mass% or less, and more preferably 70 mass% or less. Thereby, the fluidity of the resin composition at a high temperature is further improved, and a molded resin article having better coating resistance is easily obtained. That is, the content of the vinyl copolymer (C-1) based on a total amount of the resin composition may be, for example, 40 to 74 mass%, 40 to 72 mass%, 40 to 70 mass%, 45 to 74 mass%, 45 to 72 mass%, 45 to 70 mass%, 55 to 74 mass%, 55 to 72 mass% or 55 to 70 mass%.

A method of producing the vinyl copolymer (C) is not particularly limited. The vinyl copolymer (C) can be produced by, for example, subjecting a monomer component containing an aromatic vinyl monomer and a vinyl cyanide monomer to a polymerization reaction.

The polymerization reaction method for producing the vinyl copolymer (C) is not particularly limited, and may be, for example, the same polymerization reaction method as for producing the maleimide copolymer (A).

In the resin composition of the present embodiment, a total content of the maleimide copolymer (A), the graft copolymer (B) and the vinyl copolymer (C) based on a total amount of the resin composition is 90 mass% or more, or may be preferably 95 mass% or more, more preferably 98 mass% or more, and may be 100 mass%.

<Other components>

The resin composition of the present embodiment may further contain a polymer (X) other than the maleimide copolymer (A), the graft copolymer (B) and the vinyl copolymer (C).

The polymer (X) may be a polymer having at least one selected from the group consisting of the aromatic vinyl monomer unit (i), the vinyl cyanide monomer unit (ii), the maleimide monomer unit (iii), the conjugated diene monomer unit (iv), the unsaturated dicarboxylic acid monomer unit and the monomer unit (x), or a polymer including the aromatic vinyl monomer unit (i), the vinyl cyanide monomer unit (ii), the maleimide monomer unit (iii), the conjugated diene monomer unit (iv), the unsaturated dicarboxylic acid monomer unit and not including the monomer unit (x).

The content of the polymer (X) based on a total amount of the resin composition may be, for example, 10 mass% or less, and is preferably 5 mass% or less, more preferably 2 mass% or less, and may be 0 mass%.

In addition, the resin composition of the present embodiment may further contain a component other than the above components. Examples of other components include an impact resistance modifying agent, a fluidity modifying agent, a hardness modifying agent, an antioxidant, a dulling agent, a flame retardant, an auxiliary flame retardant, an anti-drip agent, a sliding property-imparting agent, a plasticizer, a lubricant, a mold releasing agent, an ultraviolet absorbing agent, a light stabilizer, an antibacterial agent, an antifungal agent, an antistatic agent, a pigment, and a dye.

The melt mass flow rate of the resin composition of the present embodiment under conditions of 220°C and a load of 98 N is 3 g/10 min or more, preferably 5 g/10 min or more, and more preferably 8 g/10 min or more. Since such a resin composition has better fluidity at a high temperature, the above effect is more significantly exhibited.

In addition, the melt flow rate is 23 g/10 min or less, preferably 21 g/10 min or less, and more preferably 19 g/10 min or less. With such a resin composition, a molded resin article having better heat resistance and impact resistance is obtained. That is, the melt flow rate may be, for example, 3 to 23 g/10 min, 3 to 21 g/10 min, 3 to 19 g/10 min, 5 to 23 g/10 min, 5 to 21 g/10 min, 5 to 19 g/10 min, 8 to 23 g/10 min, 8 to 21 g/10 min or 8 to 19 g/10 min.

The gel fraction of the resin composition of the present embodiment based on a total amount of the resin composition is preferably 15 mass% or more, more preferably 17 mass% or more, and still more preferably 19 mass% or more. Thereby, a molded resin article having better impact resistance is easily obtained.

In addition, the gel fraction of the resin composition of the present embodiment based on a total amount of the resin composition is preferably 25 mass% or less, more preferably 24 mass% or less, and still more preferably 22 mass% or less. Thereby, the fluidity of the resin composition at a high temperature is further improved, and a molded resin article having better coating resistance is easily obtained. That is, the gel fraction of the resin composition of the present embodiment based on a total amount of the resin composition may be, for example, 15 to 25 mass%, 15 to 24 mass%, 15 to 22 mass%, 17 to 25 mass%, 17 to 24 mass%, 17 to 22 mass%, 19 to 25 mass%, 19 to 24 mass% or 19 to 22 mass%.

Here, the gel fraction of the resin composition is measured by the following method.

<Measurement of gel fraction>

(1) 1.5 g of a sample is accurately weighed out in a 100mL stoppered Erlenmeyer flask. (s)
(2) 30 mL of methyl ethyl ketone (MEK) is added, and the mixture is left overnight.
(3) After being left overnight, the sample is shook with a shaking machine for 10 minutes.
(4) A 50 mL SUS centrifuge tube is accurately weighed out. (b)
(5) The sample solution is transferred to the centrifuge tube, and the residual liquid in the Erlenmeyer flask is washed with MEK.
(6) Centrifugal separation is performed using a centrifugal separator at 24,000 rpm for 40 minutes.
(7) After centrifugal separation, the centrifuge tube is removed and the supernatant liquid is discarded. Then, a small amount of MEK is added to the centrifuge tube, and the supernatant liquid is discarded.
(8) The centrifuge tube is pre-dried in a hot-air dryer (70°C to 75°C) for 4 hours or longer.
(9) After pre-drying, vacuum-drying is performed in a vacuum dryer (70°C, 76 cmHg) for 15 hours or longer.
(10) After vacuum-drying, cooling is performed in a desiccator at room temperature, and the sample is accurately weighed out. (a)
(11) The gel fraction is calculated by the following calculation formula.

$$\text{Gel fraction (\%)} = 100 \times (a-b)/s$$

[where, a indicates the weight after vacuum-drying (the weight of dry gel+centrifuge tube) (g), b indicates the weight (g) of the empty centrifuge tube, and s indicates the weight (g) of the sample].

The resin composition of the present embodiment may be mixed with an inorganic material and used as a composite material. Examples of inorganic materials include inorganic fillers such as glass fibers, talc, and mica, and heat dissipation materials and electromagnetic wave absorbing materials. In addition, examples of inorganic materials include

carbon black, titanium oxide, and pigments.

A method of producing the resin composition of the present embodiment is not particularly limited, and for example, can be produced by mixing the above components under a high temperature.

The temperature during mixing may be any temperature at which the maleimide copolymer (A), the graft copolymer (B) and the vinyl copolymer (C) can be fluidized and mixed. For example, when the highest glass transition temperature among the glass transition temperature ($Tg_1$) of the maleimide copolymer (A), the glass transition temperature ($Tg_2$) of the graft copolymer (B), and the glass transition temperature ($Tg_3$) of the vinyl copolymer (C) is $Tg_0$, the mixing temperature is preferably $Tg_0$ or more, more preferably $Tg_0$+60°C or higher, and still more preferably $Tg_0$+100°C or higher. In addition, the mixing temperature may be, for example, $Tg_0$+150°C or lower, or $Tg_0$+130°C or lower. That is, the mixing temperature may be, for example, $Tg_0$ to $Tg_0$+150°C, $Tg_0$ to $Tg_0$+130°C, $Tg_0$+60°C to $Tg_0$+150°C, $Tg_0$+60°C to $Tg_0$ +130°C, $Tg_0$+100°C to $Tg_0$+150°C, or $Tg_0$+100°C to $Tg_0$+130°C.

The mixing method is not particularly limited, for example, it can be appropriately selected from among known methods using a single-screw extruder, a twin-screw extruder, a banbury mixer, a kneader and the like.

The resin composition of the present embodiment can be used alone or as a composite material mixed with an inorganic material to produce a molded resin article. That is, a molded resin article is produced by causing the resin composition of the present embodiment to flow at a high temperature and molding it.

The temperature during molding may be a temperature at which the resin composition can be fluidized and molded. For example, when the Vicat softening point of the resin composition is $V_1$ (°C), the molding temperature is preferably Vi+100°C or higher, more preferably Vi+120°C or higher, and still more preferably Vi+130°C or higher.

In addition, the molding temperature may be, for example, $V_1$+170°C or lower, and is preferably Vi+160°C or lower, and more preferably Vi+150°C or lower. In the related art, if the molding temperature of the resin composition is low, strain tends to remain in the molded article, cracks tend to occur, and the appearance of the coated surface due to the cracks tends to be poor. In addition, if the molding temperature is high, there is a risk of various problems such as generation of a decomposition gas, deterioration of hue, and deformation of a mold occurring. On the other hand, since the resin composition of the present embodiment has excellent fluidity at a high temperature, even if the molding temperature is lowered, strain is unlikely to remain, and the occurrence of cracks and poor appearance of the coated surface due to the cracks are sufficiently reduced. Therefore, according to the resin composition of the present embodiment, it is possible to produce a molded resin article having excellent coating resistance while reducing various problems such as generation of a decomposition gas, deterioration of hue, and deformation of a mold. That is, the molding temperature may be, for example, $V_1$+100°C to $V_1$+170°C, $V_1$+ 100°C to $V_1$+160°C, $V_1$+100°C to $V_1$+150°C, $V_1$+120°C to $V_1$+170°C, $V_1$+120°C to $V_1$+160°C, $V_1$+120°C to $V_1$+150°C, $V_1$+130°C to $V_1$+170°C, $V_1$+130°C to $V_1$+160°C, or $V_1$+130°C to $V_1$+150°C.

The molding method is not particularly limited, and for example, it can be appropriately selected from among known molding methods such as extrusion molding, injection molding, blow molding, and foam molding. Since the resin composition of the present embodiment has excellent fluidity at a high temperature, it has excellent moldability and is particularly suitable for injection molding.

The application of the molded resin article containing the resin composition of the present embodiment is not particularly limited, and for example, it can be preferably used for applications such as vehicle interior and exterior parts, home appliances, office appliance parts, and building materials.

Preferable embodiments of the present invention have been described above, but the present invention is not limited to the above embodiments.

[Examples]

Hereinafter, the present invention will be described in more detail with reference to example, but the present invention is not limited to these examples.

<Production of maleimide copolymer (A1)>

A maleimide copolymer (A1) was produced by the following method.

25 parts by mass of styrene, 9 parts by mass of acrylonitrile, 3 parts by mass of maleic anhydride, 0.05 parts by mass of 2,4-diphenyl-4-methyl-1-pentene, and 12 parts by mass of methyl ethyl ketone were put into an autoclave with a volume of 120 L including a stirrer, and a gas phase was replaced with nitrogen gas and the temperature was then raised to 90°C over 40 minutes with stirring. While the temperature was maintained at 90°C after heating, a solution in which 23 parts by mass of maleic anhydride and 0.2 parts by mass of t-butyl peroxy-2-ethylhexanoate were dissolved in 75 parts by mass of methyl ethyl ketone and 33 parts by mass of styrene were continuously added over 10 hours. In addition, after addition of maleic anhydride was completed, 7 parts by mass of styrene was continuously added over 2 hours. After styrene was added, the temperature was raised to 120°C, the reaction was performed for 1 hour, and polymerization was completed. Then, 24 parts by mass of aniline and 0.4 parts by mass of trimethylamine were added to the polymerization solution and

the mixture was reacted at 140°C for 7 hours. The imidization reaction solution after the reaction was completed was put into a vent type screw extruder, and a volatile component was removed to obtain a pellet-like maleimide copolymer (A1).

The obtained maleimide copolymer (A1) had a Tg of 169°C and a weight average molecular weight of 141,000.

In addition, in the maleimide copolymer (A1), the content of the aromatic vinyl monomer unit (i) was 50.5 mass%, the content of the vinyl cyanide monomer unit (ii) was 8.2 mass%, the content of the maleimide monomer unit (iii) was 39.8 mass%, and the content of the unsaturated dicarboxylic acid monomer unit (v) was 1.5 mass%.

<Production of maleimide copolymer (A2)>

A maleimide copolymer (A2) was produced by the following method.

65 parts by mass of styrene, 7 parts by mass of maleic anhydride, 0.2 parts by mass of 2,4-diphenyl-4-methyl-1-pentene, and 25 parts by mass of methyl ethyl ketone were put into an autoclave with a volume of 120 L including a stirrer, the inside of the system was replaced with nitrogen gas, the temperature was raised to 92°C, and a solution in which 28 parts by mass of maleic anhydride and 0.18 parts by mass of t-butyl peroxy-2-ethylhexanoate were dissolved in 100 parts by mass of methyl ethyl ketone was continuously added over 7 hours. After the addition, 0.03 parts by mass of t-butyl peroxy-2-ethylhexanoate was additionally added, the temperature was raised to 120°C, the reaction was performed for 1 hour, and polymerization was completed. Then, 32 parts by mass of aniline and 0.6 parts by mass of trimethylamine were added to the polymerization solution, and the mixture was reacted at 140°C for 7 hours. The imidization reaction solution after the reaction was completed was put into a vent type screw extruder, and a volatile component was removed to obtain a pellet-like maleimide copolymer (A2).

The obtained maleimide copolymer (A2) had a Tg of 186°C and a weight average molecular weight of 110,000.

In addition, in the maleimide copolymer (A2), the content of the aromatic vinyl monomer unit (i) was 51.9 mass%, the content of the maleimide monomer unit (iii) was 46.4 mass%, and the content of the unsaturated dicarboxylic acid monomer unit (v) was 1.7 mass%.

<Graft copolymer (B1)>

A graft copolymer (B1) was produced by the following method.

The graft copolymer (B1) was produced by an emulsion graft polymerization method. 126 parts by mass of a polybutadiene latex having an average particle size of 0.3 μm and a solid content concentration of 49 mass%, 17 parts by mass of a styrene-butadiene latex having an average particle size of 0.5 μm, a styrene content of 24 mass%, and a solid content concentration of 69 mass%, 1 part by mass of sodium stearate, 0.2 parts by mass of sodium formaldehyde sulfoxylate, 0.01 parts by mass of tetrasodium ethylenediamine tetraacetic acid, 0.005 parts by mass of ferrous sulfate, and 150 parts of pure water were put into reaction tank including a stirrer, and the temperature was heated to 50°C. 45 parts by mass of a monomer mixture containing 75 mass% of styrene and 25 mass% of acrylonitrile, 1.0 part by mass of t-dodecyl mercaptan and 0.15 parts by mass of cumene hydroperoxide were continuously added thereinto in a divided manner over 6 hours. After addition in a divided manner was completed, the temperature was raised to 65°C, and moreover, polymerization was completed over 2 hours to obtain a graft copolymer (B1) latex. The obtained latex was coagulated using magnesium sulfate and sulfuric acid as coagulating agents so that the pH of the slurry during coagulation was 6.8, and washed and dehydrated and then dried to obtain a powder-like graft copolymer (B1).

The obtained graft copolymer (B1) had a Tg of -85°C.

In addition, in the graft copolymer (B1), the content of the aromatic vinyl monomer unit (i) was 31.9 mass%, the content of the vinyl cyanide monomer unit (ii) was 10.6 mass%, and the content of the conjugated diene monomer unit (iv) was 57.5 mass%.

<Vinyl copolymer (C1)>

A vinyl copolymer (C1) was produced by the following method.

A vinyl copolymer (C1) was produced by continuous bulk polymerization. Polymerization was performed in a volume of 20 L using one complete mixing tank type stirring tank as the reaction container. A raw material solution containing 58 mass% of styrene, 22 mass% of acrylonitrile and 20 mass% of ethylbenzene was produced, and continuously supplied into a reaction container at a flow rate of 6.5 L/h. In addition, t-butyl peroxy isopropyl monocarbonate as a polymerization initiator at a concentration of 150 ppm and n-dodecyl mercaptan as a chain transfer agent at a concentration of 400 ppm were continuously added to the raw material solution through the supply line of the raw material solution. The reaction temperature of the reaction container was adjusted to 144°C. The polymer solution continuously removed from the reaction container was supplied to a vacuum devolatilization tank including a preheater, and unreacted styrene, acrylonitrile, and ethylbenzene were separated. The temperature of the preheater was adjusted so that the polymer temperature in the devolatilization tank was 235°C, and the pressure in the devolatilization tank was 0.4 kPa. The

polymer was extracted from the vacuum devolatilization tank using a gear pump, extruded into a strand, cooled with cooling water, and then cut to obtain a pellet-like vinyl copolymer (C1).

The obtained vinyl copolymer (C1) had a Tg of 108°C and a weight average molecular weight of 145,000.

In addition, in the vinyl copolymer (C1), the content of the aromatic vinyl monomer unit (i) was 73.9 mass%, and the content of the vinyl cyanide monomer unit (ii) was 26.1 mass%.

<Vinyl copolymer (C2)>

A vinyl copolymer (C2) was produced by the following method.

A vinyl copolymer (C2) was produced by continuous bulk polymerization. Polymerization was performed in a volume of 20 L using one complete mixing tank type stirring tank as the reaction container. A raw material solution containing 48 mass% of styrene, 29 mass% of acrylonitrile, and 23 mass% of ethylbenzene was produced, and continuously supplied into a reaction container at a flow rate of 6.5 L/h. In addition, t-butyl peroxy isopropyl monocarbonate as a polymerization initiator at a concentration of 200 ppm, and n-dodecyl mercaptan as a chain transfer agent at a concentration of 1,300 ppm were continuously added to the raw material solution through the supply line of the raw material solution. The reaction temperature of the reaction container was adjusted to 145°C. The polymer solution continuously removed from the reaction container was supplied to a vacuum devolatilization tank including a preheater, and unreacted styrene, acrylonitrile, and ethylbenzene were separated. The temperature of the preheater was adjusted so that the polymer temperature in the devolatilization tank was 225°C, and the pressure in the devolatilization tank was 0.4 kPa. The polymer was extracted from the vacuum devolatilization tank using a gear pump, extruded into a strand, cooled with cooling water, and then cut to obtain a pellet-like vinyl copolymer (C2).

The obtained vinyl copolymer (C2) had a Tg of 108°C and a weight average molecular weight of 91,000.

In addition, in the vinyl copolymer (C2), the content of the aromatic vinyl monomer unit (i) was 67.9 mass%, and the content of the vinyl cyanide monomer unit (ii) was 32.1 mass%.

The content of each monomer unit contained in each of the copolymers obtained above is a value measured by the $^{13}C$-NMR method using the following device and measurement conditions.

device name: JNM-ECX series FT-NMR (commercially available from JEOL Ltd.)
solvent: deuterated chloroform
concentration: 2.5 mass%
temperature: 27°C
cumulative number: 8,000

(Example 1)

A resin composition of Example 1 was prepared by the following method.

A maleimide copolymer (A1), a graft copolymer (B1) and a vinyl copolymer (C1) were blended at mixing proportions (mass%) shown in Table 1, and extrusion was then performed using a twin-screw extruder TEM-35B (commercially available from Toshiba Machine Co., Ltd.) to obtain a pelletized resin composition.

For the obtained resin compositions, by the following methods, the melt mass flow rate, the charpy impact strength, the Vicat softening point and the gel fraction were measured, and the coating resistance was evaluated. The results are shown in Table 1.

[Measurement of melt mass flow rate]

The melt mass flow rate was measured at 220°C and a load of 98 N according to JIS K 7210.

[Measurement of charpy impact strength]

According to JIS K-7111, the charpy impact strength was measured using notched test pieces in the edgewise impact direction at a relative humidity of 50% and an atmosphere temperature of 23°C. Here, a digital impact tester (commercially available from Toyo Seiki Co., Ltd.) was used as the measuring machine.

[Measurement of Vicat softening point]

According to JIS K 7206, the Vicat softening point was measured using a 10 mm × 10 mm test piece having a thickness of 4 mm according to the 50 method (a load of 50 N and a heating rate 50°C/hour). Here, a HDT&VSPT test device (commercially available from Toyo Seiki Co., Ltd.) was used as the measuring machine.

[Measurement of gel fraction]

The gel fraction of the resin composition was measured by the following method.

(1) 1.5 g of a sample was accurately weighed out in a 100mL stoppered Erlenmeyer flask. (s)
(2) 30 mL of methyl ethyl ketone (MEK) was added, and the mixture was left overnight.
(3) After being left overnight, the sample was shook with a shaking machine for 10 minutes.
(4) A 50 mL SUS centrifuge tube was accurately weighed. (b)
(5) The sample solution was transferred to the centrifuge tube, and the residual liquid in the Erlenmeyer flask was washed with MEK.
(6) Centrifugal separation was performed using a centrifugal separator at 24,000 rpm for 40 minutes.
(7) After centrifugal separation, the centrifuge tube was removed and the supernatant liquid was discarded. Then, a small amount of MEK was added to the centrifuge tube, and the supernatant liquid was discarded.
(8) The centrifuge tube was pre-dried in a hot-air dryer (70°C to 75°C) for 4 hours or longer.
(9) After pre-drying, vacuum-drying was performed in a vacuum dryer (70°C, 76 cmHg) for 15 hours or longer.
(10) After vacuum-drying, cooling is performed in a desiccator at room temperature, and the sample is accurately weighed out. (a)
(11) The gel fraction is calculated by the following calculation formula.

$$\text{Gel fraction (\%)}=100\times(a-b)/s$$

[where, a indicates the weight after vacuum-drying (the weight of dry gel+centrifuge tube) (g), b indicates the weight (g) of the empty centrifuge tube, and s indicates the weight (g) of the sample].

[Evaluation of coating resistance]

Using an injection molding machine, a square plate of 75 mm×75 mm×3 mm was molded under conditions of a cylinder temperature of 220°C and a mold temperature of 50°C. Using a general-purpose urethane paint that is generally used for coating an ABS resin for vehicle exteriors, the coating resistance of the square plate was evaluated by the following method.

undercoat: high urethane No. 5000 (black metallic) (commercially available from NOF Corporation)
topcoat: high urethane No. 5300 (clear) (commercially available from NOF Corporation)
film thickness: undercoat 15 to 17 μm, topcoat 22 to 25 μm
drying time: 75°C, 25 minutes

The surface condition of the obtained coated molded article was visually evaluated according to the following criteria.

AA: There were no irregularities on the coated surface.
A: Slight irregularities were confirmed on the coated surface.
C: A plurality of irregularities were confirmed on the coated surface.

(Examples 2 to 7)

Resin compositions were prepared in the same manner as in Example 1 except that types and mixing proportions of polymers were changed as shown in Table 1. In addition, the obtained resin compositions were measured and evaluated in the same manner as in Example 1. The results are shown in Table 1.

(Comparative Examples 1 to 6)

Resin compositions were prepared in the same manner as in Example 1 except that types and mixing proportions of polymers were changed as shown in Table 2. In addition, the obtained resin compositions were measured and evaluated in the same manner as in Example 1. The results are shown in Table 2.

[Table 1]

| | | Example 1 | Example 2 | Example 3 | Example 4 | Example 5 | Example 6 | Example 7 |
|---|---|---|---|---|---|---|---|---|
| Mixing proportion | Maleimide copolvmer (A1) | 10 | 15 | 25 | 35 | 10 | 10 | 10 |
| | Maleimide copolvmer (A2) | - | - | - | - | - | - | - |
| | Graft copolymer (B1) | 25 | 25 | 25 | 25 | 20 | 30 | 25 |
| | Vinyl copolvmer (C1) | 65 | 60 | 50 | 40 | 70 | 60 | - |
| | Vinyl copolymer (C2) | - | - | - | - | - | - | 65 |
| Structural unit | Aromatic vinyl monomer unit (i) | 61.1 | 59_9 | 57.6 | 55.2 | 63.2 | 59.0 | 57.2 |
| | Vinyl cyanide monomer unit (ii) | 20.4 | 19.5 | 17.8 | 16.0 | 21.2 | 19.7 | 24.3 |
| | Maleimide monomer unit (iii) | 4.0 | 6.0 | 10.0 | 13.9 | 4.0 | 4.0 | 4.0 |
| | Conjugated diene monomer unit (iv) | 14.4 | 14.4 | 14.4 | 14.4 | 11.5 | 17.3 | 14.4 |
| | Unsaturated dicarboxylic acid monomer unit (v) | 0.2 | 0.2 | 0.4 | 0.5 | 0.2 | 0.2 | 0.2 |
| Evaluation | Melt mass flow rate (g/10 min) | 9 | 8 | 6 | 4 | 11 | 6 | 18 |
| | Charpy impact strength (kJ/m$^2$) | 17 | 15 | 13 | 10 | 11 | 27 | 12 |
| | Vicat softening point (°C) | 107 | 110 | 116 | 123 | 108 | 105 | 107 |
| | Gel fraction (%) | 20 | 20 | 21 | 21 | 17 | 24 | 20 |
| | Coating resistance | AA | AA | A | A | AA | AA | AA |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Mixing proportion | Maleimide copolymer (A1) | - | - | 45 | 10 | 10 | - |
| | Maleimide copolvmer (A2) | - | - | - | - | - | 35 |
| | Graft copolymer (BI) | 25 | 25 | 25 | 15 | 35 | 25 |
| | Vinyl copolymer (C1) | 75 | - | 30 | 75 | 55 | 40 |
| | Vinyl copolvmer (C2) | - | 75 | - | - | - | - |
| Structural unit | Aromatic vinyl monomer unit (i) | 63.4 | 58.9 | 52.9 | 65.3 | 56.9 | 55.7 |
| | Vinyl cyanide monomer unit (ii) | 22.2 | 26.7 | 14.2 | 22.0 | 18.9 | 13.1 |
| | Maleimide monomer unit (iii) | - | - | 17.9 | 4.0 | 4.0 | 16.2 |
| | Conjugated diene monomer unit (iv) | 14.4 | 14.4 | 14.4 | 8.6 | 20.1 | 14.4 |
| | Unsaturated dicarboxylic acid monomer unit (v) | - | - | 0.7 | 0.2 | 0.2 | 0.6 |
| Evaluation | Melt mass flow rate (g/10 min) | 13 | 24 | 2 | 12 | 2 | 3 |
| | Charpy impact strength ($kJ/m^2$) | 21 | 15 | 6 | 5 | 43 | 8 |
| | Vicat softening point (°C) | 100 | 101 | 129 | 108 | 104 | 124 |
| | Gel fraction (%) | 19 | 19 | 22 | 13 | 28 | 21 |
| | Coating resistance | AA | AA | C | C | C | C |

## Claims

1. A resin composition, comprising:

   a maleimide copolymer (A) including an aromatic vinyl monomer unit, a vinyl cyanide monomer unit, a maleimide monomer unit and an unsaturated dicarboxylic acid monomer unit;
   a graft copolymer (B) obtained by graft-polymerizing a polymer (b) having a conjugated diene monomer unit with at least one selected from the group consisting of an aromatic vinyl monomer and a vinyl cyanide monomer; and
   a vinyl copolymer (C) including an aromatic vinyl monomer unit and a vinyl cyanide monomer unit and not including a maleimide monomer unit,
   wherein, with respect to a total amount of 100 parts by mass of the maleimide copolymer (A), the graft copolymer (B) and the vinyl copolymer (C), a total content of the aromatic vinyl monomer unit is 55.0 to 65.0 parts by mass, a total content of the vinyl cyanide monomer unit is 15.0 to 27.0 parts by mass, a total content of the maleimide monomer unit is 3.0 to 15.0 parts by mass, a total content of the conjugated diene monomer unit is 10.0 to 20.0 parts by mass, and a total content of the unsaturated dicarboxylic acid monomer unit is 0.05 to 10.0 parts by mass, and
   wherein the melt mass flow rate measured by the method described in JIS K 7210 under conditions of 220°C and a load of 98 N is 3 to 23 g/10 min,
   wherein a total content of the maleimide copolymer (A), the graft copolymer (B) and the vinyl copolymer (C) based on a total amount of the resin composition is 90 mass% or more.

2. The resin composition according to claim 1,
   wherein the maleimide copolymer (A) contains a maleimide copolymer (A-1) having a maleimide monomer unit content of 20.0 mass% or more.

3. The resin composition according to claim 2,
   wherein the content of the maleimide copolymer (A-1) based on a total amount of the resin composition is 5 to 40 mass%.

4. The resin composition according to any one of claims 1 to 3,
   wherein the graft copolymer (B) contains a graft copolymer (B-1) having a conjugated diene monomer unit content of 45.0 to 65.0 mass%.

5. The resin composition according to claim 4,
   wherein the content of the graft copolymer (B-1) based on a total amount of the resin composition is 16 to 34 mass%.

6. The resin composition according to any one of claims 1 to 5,
   wherein the vinyl copolymer (C) contains a vinyl copolymer (C-1) having a total content of 80.0 mass% or more of the aromatic vinyl monomer unit and the vinyl cyanide monomer unit.

7. The resin composition according to claim 6,
   wherein the content of the vinyl copolymer (C-1) based on a total amount of the resin composition is 40 to 74 mass%.

8. The resin composition according to any one of claims 1 to 7,
   wherein the gel fraction based on a total amount of the resin composition is 15 to 25 mass%, the gel fraction being calculated using the method as defined in the description.

9. A molded resin article comprising the resin composition according to any one of claims 1 to 8.

## Patentansprüche

1. Harzzusammensetzung, umfassend:

   ein Maleimid-Copolymer (A), umfassend eine aromatische Vinyl-Monomereinheit, eine Vinylcyanid-Monomereinheit, eine Maleimid-Monomereinheit und eine ungesättigte Dicarbonsäure-Monomereinheit;
   ein Pfropf-Copolymer (B), erhalten durch Pfropfpolymerisieren eines Polymers (b), das eine konjugierte Dien-Monomereinheit aufweist, mit zumindest einem, das ausgewählt ist aus der Gruppe bestehend aus einem

aromatischen Vinyl-Monomer und einem Vinylcyanid-Monomer; und
ein Vinyl-Copolymer (C), das eine aromatische Vinyl-Monomereinheit und eine Vinylcyanid-Monomereinheit umfasst und keine Maleimid-Monomereinheit umfasst,
worin, bezogen auf die Gesamtmenge von 100 Masseteilen des Maleimid-Copolymers (A), des Pfropf-Copolymers (B) und des Vinyl-Copolymers (C), der Gesamtgehalt der aromatischen Vinyl-Monomereinheit 55,0 bis 65,0 Masseteile beträgt, der Gesamtgehalt der Vinylcyanid-Monomereinheit 15,0 bis 27,0 Masseteile beträgt, der Gesamtgehalt der Maleimid-Monomereinheit 3,0 bis 15,0 Masseteile beträgt, der Gesamtgehalt der konjugierten Dien-Monomereinheit 10,0 bis 20,0 Masseteile beträgt und der Gesamtgehalt der ungesättigten Dicarbonsäure-Monomereinheit 0,05 bis 10,0 Masseteile beträgt, und worin die Schmelzflussrate, gemessen durch das in JIS K 7210 beschriebene Verfahren unter Bedingungen von 220°C und einer Last von 98 N, 3 bis 23 g/10 min beträgt, worin der Gesamtgehalt des Maleimid-Copolymers (A), des Pfropf-Copolymers (B) und des Vinyl-Copolymers (C), bezogen auf die Gesamtmenge der Harzzusammensetzung, 90 Masse-% oder mehr beträgt.

**2.** Harzzusammensetzung gemäß Anspruch 1,
worin das Maleimid-Copolymer (A) ein Maleimid-Copolymer (A-1) mit einem Maleimid-Monomereinheitengehalt von 20,0 Masse-% oder mehr enthält.

**3.** Harzzusammensetzung gemäß Anspruch 2,
worin der Gehalt des Maleimid-Copolymers (A-1), bezogen auf die Gesamtmenge der Harzzusammensetzung, 5 bis 40 Masse-% beträgt.

**4.** Harzzusammensetzung gemäß irgendeinem der Ansprüche 1 bis 3,
worin das Pfropf-Copolymer (B) ein Pfropf-Copolymer (B-1) mit einem Gehalt an konjugierter Dien-Monomereinheit von 45,0 bis 65,0 Masse-% enthält.

**5.** Harzzusammensetzung gemäß Anspruch 4,
worin der Gehalt des Pfropf-Copolymers (B-1), bezogen auf die Gesamtmenge der Harzzusammensetzung, 16 bis 34 Masse-% beträgt.

**6.** Harzzusammensetzung gemäß irgendeinem der Ansprüche 1 bis 5,
worin das Vinyl-Copolymer (C) ein Vinyl-Copolymer (C-1) mit einem Gesamtgehalt von 80,0 Masse-% oder mehr der aromatischen Vinyl-Monomereinheit und der Vinylcyanid-Monomereinheit enthält.

**7.** Harzzusammensetzung gemäß Anspruch 6,
worin der Gehalt des Vinyl-Copolymers (C-1), bezogen auf die Gesamtmenge der Harzzusammensetzung, 40 bis 74 Masse-% beträgt.

**8.** Harzzusammensetzung gemäß irgendeinem der Ansprüche 1 bis 7,
worin die Gelfraktion, bezogen auf die Gesamtmenge der Harzzusammensetzung, 15 bis 25 Masse-% ausmacht, wobei die Gelfraktion unter Verwendung des wie es in der Beschreibung definierten Verfahrens berechnet wird.

**9.** Geformter Harzartikel, umfassend die Harzzusammensetzung gemäß irgendeinem der Ansprüche 1 bis 8.

## Revendications

**1.** Composition de résine, comprenant :

un copolymère de maléimide (A) incluant un motif monomère de vinyle aromatique, un motif monomère de cyanure de vinyle, un motif monomère de maléimide et un motif monomère d'acide dicarboxylique insaturé ;
un copolymère greffé (B) obtenu par polymérisation par greffage d'un polymère (b) présentant un motif monomère de diène conjugué ayant au moins un sélectionné dans le groupe consistant en un monomère de vinyle aromatique et un monomère de cyanure de vinyle ; et
un copolymère de vinyle (C) incluant un motif monomère de vinyle aromatique et un motif monomère de cyanure de vinyle et n'incluant pas de motif monomère de maléimide,
dans laquelle, par rapport à une quantité totale de 100 parties en masse du copolymère de maléimide (A), du copolymère greffé (B) et du copolymère de vinyle (C), une teneur totale du motif monomère de vinyle aromatique est de 55,0 à 65,0 parties en masse, une teneur totale du motif monomère de cyanure de vinyle est de 15,0 à 27,0

parties en masse, une teneur totale du motif monomère de maléimide est de 3,0 à 15,0 parties en masse, une teneur totale du motif monomère de diène conjugué est de 10,0 à 20,0 parties en masse, et une teneur totale du motif monomère d'acide dicarboxylique insaturé est de 0,05 à 10,0 parties en masse, et
dans laquelle le débit massique à l'état fondu mesuré par le procédé décrit dans la JIS K 7210 dans des conditions de 220 °C et d'une charge de 98 N est de 3 à 23 g/10 min,
dans laquelle une teneur totale du copolymère de maléimide (A), du copolymère greffé (B) et du copolymère de vinyle (C) sur la base d'une quantité totale de la composition de résine est de 90 % en masse ou plus.

**2.** Composition de résine selon la revendication 1,
dans laquelle le copolymère de maléimide (A) contient un copolymère de maléimide (A-1) présentant une teneur en motif monomère de maléimide de 20,0 % en masse ou plus.

**3.** Composition de résine selon la revendication 2,
dans laquelle la teneur du copolymère de maléimide (A-1) sur la base d'une quantité totale de la composition de résine est de 5 à 40 % en masse.

**4.** Composition de résine selon l'une quelconque des revendications 1 à 3, dans laquelle le copolymère greffé (B) contient un copolymère greffé (B-1) présentant une teneur en motif monomère de diène conjugué de 45,0 à 65,0 % en masse.

**5.** Composition de résine selon la revendication 4,
dans laquelle la teneur du copolymère greffé (B-1) sur la base d'une quantité totale de la composition de résine est de 16 à 34 % en masse.

**6.** Composition de résine selon l'une quelconque des revendications 1 à 5, dans laquelle le copolymère de vinyle (C) contient un copolymère de vinyle (C-1) présentant une teneur totale de 80,0 % en masse ou plus du motif monomère de vinyle aromatique et du motif monomère de cyanure de vinyle.

**7.** Composition de résine selon la revendication 6,
dans laquelle la teneur du copolymère de vinyle (C-1) sur la base d'une quantité totale de la composition de résine est de 40 à 74 % en masse.

**8.** Composition de résine selon l'une quelconque des revendications 1 à 7, dans laquelle la fraction de gel sur la base d'une quantité totale de la composition de résine est de 15 à 25 % en masse, la fraction de gel étant calculée en utilisant le procédé tel que défini dans la description.

**9.** Article en résine moulé comprenant la composition de résine selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H3205411 A
- JP H959481 A